# EUROPÄISCHE PATENTANMELDUNG

(11) **EP 4 803 786 A1**
(43) Veröffentlichungstag der Anmeldung: **09.09.2026**
(21) Anmeldenummer: 26161777.3
(22) Anmeldetag: 02.03.2026
(51) Int. Cl.: F16K 3/08, A47J 31/44, A47J 31/46, F16K 11/074

(54) **MEHRWEGEVENTIL UND KAFFEEAUTOMAT**

(30) Priorität: 04.03.2025 PL 13262425 U
(71) Anmelder: BSH Hausgeräte GmbH, 81739 München (DE)
(72) Erfinder: Einsiedler, Thomas, 83278 Traunstein (DE); Reichel, Thomas, 83278 Traunstein (DE)

(57) **Zusammenfassung**

Die vorliegenden Erfindung betrifft ein Mehrwegeventil, insbesondere zur Verteilung und Steuerung der Strömungsrichtung von Wasser in Kaffeevollautomaten, das einen starren, aus Kunststoff gefertigten Körper aufweist, der aus einem oberen Gehäuse (1) und einem unteren Gehäuse (18) besteht und eine drehbare Ventilscheibe (12) aufweist, die in dem Raum zwischen dem oberen Gehäuse (1) und dem unteren Gehäuse (18) angeordnet ist und sich um eine Drehachse (4) dreht. Das obere Gehäuse (1) besitzt mindestens zwei Ableitungskanäle (2, 7), die im Abstand R von der Drehachse (4) angeordnet sind, während das untere Gehäuse (18) einen Zuleitungskanal (14) besitzt, der in der Drehachse (4) angeordnet ist, wobei die Ventilscheibe (12) einen radialen Wasserkanal (16) aufweist, der an der Drehachse (4) an der unteren Oberfläche der Ventilscheibe (12) beginnt und an der oberen Oberfläche der Scheibe im Abstand R von der Drehachse (4) endet.

## Beschreibung

Gegenstand der vorliegenden Erfindung ist ein Mehrwegeventil mit einer drehbaren, flachen, zylindrischen Ventilscheibe zur Wasserverteilung sowie zur Steuerung der Strömungsrichtung in Steuer- und Regelsystemen von Haushaltsgeräten, insbesondere in Wasserverteilungssystemen in Kaffeevollautomaten sowie ein Kaffeeautomat mit einem solchen Ventil.

Mehrwegeventile in Kaffeemaschinen spielen eine Schlüsselrolle bei der Steuerung des Wasserflusses und des Drucks in den verschiedenen Phasen des Kaffeebrühprozesses. Sie werden eingesetzt, um Wasser zu verschiedenen Komponenten der Kaffeemaschine zu steuern und zu leiten, wie z. B. zur Brüheinheit, in der heißes Wasser unter Druck durch die gemahlenen Kaffeebohnen fließt, zum Boiler mit Heizelement oder zum Dampfsystem, das u. a. zum Aufschäumen von Milch verwendet wird.

In der Praxis realisiert das Mehrwegeventil Funktionen wie unter anderem das Umschalten zwischen dem Brühvorgang und dem Milchaufschäumen, die Regulierung des Drucks während des Brühens oder auch die Ermöglichung der Reinigung einzelner Teile der Kaffeemaschine. Durch seinen Einsatz werden Kaffeevollautomaten effizienter und ihre Bedienung präziser und komfortabler. Dies ist besonders wichtig bei professionellen Kaffeemaschinen, bei denen Geschwindigkeit, präzise Einstellungen und Zuverlässigkeit im Kontext der Zubereitung von qualitativ hochwertigem Kaffee von entscheidender Bedeutung sind.

Aus der EP3556269A1 ist ein Mehrwegeventil für eine Vorrichtung zur Zubereitung von Heißgetränken bekannt, insbesondere zur Verteilung von heißem Wasser und/oder heißem Dampf in Kaffeevollautomaten, das eine Einlassleitung mit einer Einlassöffnung und mindestens einer Auslassöffnung sowie ein Gehäuse mit einem Scheibenträger und einer Bodenfläche mit Öffnungen sowie einen Innenraum zur Aufnahme von befestigenden keramischen Ventilscheiben umfasst, die in dichtem Eingriff miteinander angeordnet sind und relativ zueinander verstellbar sind, nämlich mindestens eine feste Verteilerscheibe und mindestens eine drehbar verstellbare Steuerscheibe, bezogen auf das Gehäuse, die einen Separator zur Aufteilung der Einlassleitung in mehrere Einlasskanäle und zur Aufteilung und Verteilung des Heißwasser- und/oder Heißdampfstroms in Teilströme zur Versorgung des Innenraums des Gehäuses aufweist, wobei der Separator außerhalb des Innenraums angeordnet ist.

Der Hauptnachteil dieser Art von Ventil ist sein komplizierter Aufbau, was zu hohen Produktionskosten führt. Die verwendeten keramischen Elemente erfordern bei der Herstellung den Einsatz von speziellen Materialien und Technologien, die in den Produktionsstätten für Haushaltsgeräte nicht verfügbar sind, weshalb sie von Zulieferern geliefert werden, was zusätzliche logistische Maßnahmen erfordert und die Produktionskosten erhöht. Auch die großen Abmessungen des Ventils führen zu Einschränkungen bei der Konstruktion von kompakten Kaffeemaschinen.

Erfindungsgemäß weist ein Mehrwegeventil, insbesondere zur Wasserverteilung in Kaffeevollautomaten sowie zur Steuerung der Strömungsrichtung des Wassers in ebendiesen Kaffeemaschinen, einen starren, aus Kunststoff gefertigten Körper auf, der aus einem oberen Gehäuse und einem unteren Gehäuse besteht und der eine drehbare Ventilscheibe aufweist, die in dem Raum zwischen dem oberen Gehäuse und dem unteren Gehäuse angeordnet ist und sich um eine Drehachse dreht, wobei das obere Gehäuse mindestens zwei Ableitungskanäle aufweist, die im Abstand R von der Drehachse angeordnet sind, während das untere Gehäuse einen Zuleitungskanal aufweist, der in der Drehachse angeordnet ist, und die Ventilscheibe einen radialen Wasserkanal aufweist, der an der Drehachse an der unteren Oberfläche der Ventilscheibe beginnt und an der oberen Oberfläche der Scheibe im Abstand R von der Drehachse endet.

Vorteilhafterweise ist die Ventilscheibe aus Kunststoff gefertigt, vorzugsweise im Spritzgussverfahren aus einem thermoplastischen Kunststoff. Die Verwendung von thermoplastischem Kunststoff zur Herstellung der Ventilscheibe reduziert die Kosten und ermöglicht ihre Produktion neben der Produktion anderer Kunststoffelemente.

Vorteilhafterweise sind die Ableitungskanäle und der Zuleitungskanal zueinander parallel und dabei parallel zur Drehachse. Dies senkt die Kosten für die Herstellung der Spritzgussformen, die die Gehäuse formen, da die Wasserkanäle in Richtung der Formgebung der Gehäuse geformt werden können.

Vorteilhafterweise sind die Ableitungskanäle sowie der Zuleitungskanal gegenüber der Ventilscheibe mittels Dichtungen abgedichtet, die die Form eines O-Rings haben und von der Seite der Ventilscheibe teilweise vertieft sind in ringförmigen Nuten, die jeden der in den Gehäusen ausgebildeten Wasserkanäle umgeben.

Vorteilhafterweise ist die Ventilscheibe über einen Bolzen, der die Drehachse definiert, drehbar mit dem oberen Gehäuse verbunden.

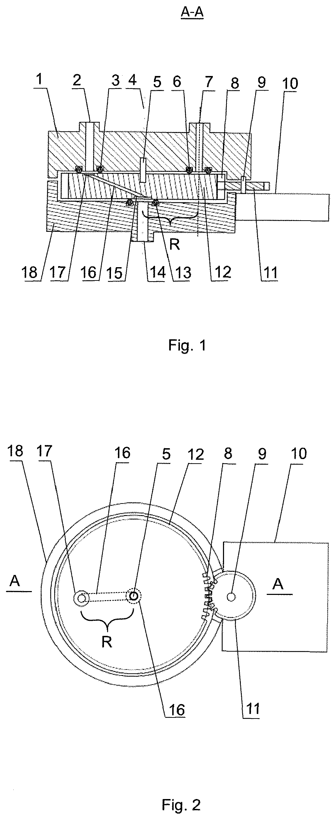

Eine Ausführungsform der Erfindung ist in der Zeichnung dargestellt, wobei
- Fig. 1: das Ventil im Längsschnitt entlang der Drehachse zeigt, und
- Fig. 2: das Ventil in der Draufsicht, bei abgenommenem oberen Gehäuse, zeigt.

Ein Mehrwegeventil, insbesondere zur Wasserverteilung sowie zur Steuerung der Strömungsrichtung des Wassers in Kaffeevollautomaten, weist einen starren, im Spritzgussverfahren aus thermoplastischem Kunststoff gefertigten Körper auf, der aus einem oberen Gehäuse 1 und einem unteren Gehäuse 18 besteht. Im Körper, im Raum zwischen dem oberen Gehäuse 1 und dem unteren Gehäuse 18, befindet sich eine drehbare Ventilscheibe 12, die über einen Bolzen 5, dessen Längsachse die Drehachse 4 der Ventilscheibe 12 bildet, drehbar mit dem oberen Gehäuse 1 verbunden ist. Die Ventilscheibe 12 hat die Form einer runden, flachen Scheibe und ist im Spritzgussverfahren aus Kunststoff gefertigt. An ihrem Umfang sind Getriebezähne 8 ausgebildet, die mit den Zähnen eines Zahnrads 11 zusammenwirken. Dieses Zahnrad 11 ist auf der Welle 9 eines Elektromotors 10 befestigt, der am Körper des Ventils angebracht ist. Nach dem Starten des Elektromotors 10 wird der Antrieb über das Getriebe 8 auf die Ventilscheibe 12 übertragen, was zu deren Drehung um die Drehachse 4 führt. Das obere Gehäuse 1 weist zwei Ableitungskanäle 2, 7 auf, die sich gegenüberliegend im Abstand R von der Drehachse 4 befinden, einen ersten Ableitungskanal 2 und einen zweiten Ableitungskanal 7. Das untere Gehäuse 18 hingegen weist einen Zuleitungskanal 14 auf, der in der Drehachse 4 angeordnet ist. Die Ableitungskanäle 2, 7 und der Zuleitungskanal 14 sind zueinander parallel und dabei parallel zur Drehachse 4. Die Ventilscheibe 12 weist einen schrägen Wasserkanal 16 auf, der radial in ihr ausgebildet ist und mit einer senkrechten Vertiefung 15 beginnt, die in der Drehachse 4 an der unteren Oberfläche der Ventilscheibe 12 angeordnet ist, und mit einer senkrechten Vertiefung 17 an der oberen Oberfläche der Scheibe im Abstand R von der Drehachse 4 endet. Die Ableitungskanäle 2, 7 sowie der Zuleitungskanal 14 sind gegenüber der Ventilscheibe 12 mittels Dichtungen 3, 6, 13 abgedichtet, die die Form eines O-Rings haben und von der Seite der Ventilscheibe 12 teilweise in ringförmigen Nuten vertieft sind, die jeden der in den Gehäusen ausgebildeten Wasserkanäle umgeben.

Der Zuleitungskanal 14 steht in einer permanenten, dichten hydraulischen Verbindung mit dem Wasserkanal 16 der Ventilscheibe 12. Die Verbindung der Ableitungskanäle 2, 7 mit dem Wasserkanal 16 erfolgt hingegen sequenziell in Abhängigkeit vom Drehwinkel der Ventilscheibe 12. Und so wird die dichte hydraulische Verbindung des Zuleitungskanals 14 mit dem Ableitungskanal 2 dann hergestellt, wenn die Ventilscheibe 12 in eine solche Position gedreht wird, dass die Vertiefung 17 axial mit dem Ableitungskanal 2 fluchtet.

### BEZUGSZEICHENLISTE

- 1: oberes Gehäuse
- 2: erster Ableitungskanal
- 3: Dichtung
- 4: Drehachse der Scheibe
- 5: Bolzen
- 6: Dichtung
- 7: zweiter Ableitungskanal
- 8: Getriebe
- 9: Motorwelle
- 10: Elektromotor
- 11: Zahnrad
- 12: Ventilscheibe
- 13: Dichtung
- 14: Zuleitungskanal
- 15: Vertiefung
- 16: Wasserkanal
- 17: Vertiefung
- 18: unteres Gehäuse

## Patentansprüche

1. Mehrwegeventil, insbesondere zur Wasserverteilung sowie zur Steuerung einer Strömungsrichtung von Wassers in Kaffeeautomaten, insbesondere Kaffeevollautomaten, mit einem starren, aus Kunststoff gefertigten Körper, der ein oberes Gehäuse (1) und ein unteres Gehäuse (18) umfasst und eine drehbare Ventilscheibe (12) aufweist, die in dem Raum zwischen dem oberen Gehäuse (1) und dem unteren Gehäuse (18) angeordnet ist und sich um eine Drehachse (4) dreht, wobei das obere Gehäuse (1) mindestens zwei Ableitungskanäle (2, 7) aufweist, die im Abstand R von der Drehachse (4) angeordnet sind, während das untere Gehäuse (18) einen Zuleitungskanal (14) aufweist, der entlang der Drehachse (4) angeordnet ist, **dadurch gekennzeichnet, dass** die Ventilscheibe (12) einen insbesondere radialen Wasserkanal (16) aufweist, der an der Drehachse (4) an der unteren Oberfläche der Ventilscheibe (12) beginnt und an der oberen Oberfläche der Scheibe im Abstand R von der Drehachse (4) endet.

2. Mehrwegeventil nach Anspruch 1, **dadurch gekennzeichnet, dass** die Ventilscheibe (12) aus Kunststoff gefertigt ist.

3. Mehrwegeventil nach Anspruch 1 oder 2, **dadurch gekennzeichnet, dass** die Ableitungskanäle (2, 7) und der Zuleitungskanal (14) zueinander parallel und dabei parallel zur Drehachse (4) sind.

4. Mehrwegeventil nach einem der Ansprüche 1 bis 3, **dadurch gekennzeichnet, dass** die Ableitungskanäle (2, 7) sowie der Zuleitungskanal (14) gegenüber der Ventilscheibe (12) mittels Dichtungen (3, 6, 13) abgedichtet sind, die die Form eines O-Rings haben und von der Seite der Ventilscheibe (12) teilweise in ringförmigen Nuten vertieft sind, die jeden der in den Gehäusen ausgebildeten Wasserkanäle umgeben.

5. Mehrwegeventil nach Anspruch 1, **dadurch gekennzeichnet, dass** die Ventilscheibe (12) über einen Bolzen (5), der die Drehachse (4) definiert, drehbar mit dem oberen Gehäuse (1) verbunden ist.

6. Kaffeeautomat, insbesondere Kaffeevollautomat, **gekennzeichnet durch** ein Mehrwegeventil nach einem der Ansprüche 1 bis 5.
